Europäisches Patentamt

European Patent Office

Office européen des brevets

(11) Veröffentlichungsnummer: **0 027 170 B1**

(12) **EUROPÄISCHE PATENTSCHRIFT**

(45) Veröffentlichungstag der Patentschrift:
27.04.83

(51) Int. Cl.³: **H 01 H 13/70, H 04 M 1/23**

(21) Anmeldenummer: **80105096.4**

(22) Anmeldetag: **27.08.80**

(54) **Drucktastenblock.**

(30) Priorität: **28.09.79 DE 2939387**

(43) Veröffentlichungstag der Anmeldung:
**22.04.81 Patentblatt 81/16**

(45) Bekanntmachung des Hinweises auf die Patenterteilung:
**27.04.83 Patentblatt 83/17**

(84) Benannte Vertragsstaaten:
**AT BE FR IT NL**

(56) Entgegenhaltungen:
**DE-A-2 539 322**
**DE-A-2 551 143**
**DE-B-2 348 979**
**DE-B-2 352 230**

(73) Patentinhaber: **Telefonbau und Normalzeit GmbH,
Mainzer Landstrasse 128-146 Postfach 4432,
D-6000 Frankfurt (Main) (DE)**

(72) Erfinder: **Niederhöfer, Karl-Heinz, Ing.-grad.,
Peter-Bied-Strasse 46, D-6230 Frankfurt (Main) (DE)**

ACTORUM AG

## Drucktastenblock

Die Erfindung betrifft einen Drucktastenblock, insbesondere die Tastenwahl in Fernmeldegeräten, bei dem beim Betätigen einer Taste jeweils mehreren Tasten gemeinsame Kontakte über eine seitlich verschiebbare Kulisse betätigt werden, welche Kulisse plattenförmig aus Kunststoff ausgebildet und in senkrechter Lage zur Bewegungsrichtung der Tasten aufgehängt ist, und bei welchem Drucktastenblock zur seitlichen Verschiebung der Kulisse diese mit Aussparungen versehen ist, in die Schrägen der Tasten eingreifen.

Es sind Drucktastenblöcke bekannt, bei denen gemeinsame Kontakte durch Kugelreihen oder durch eine Vielzahl von Umlenkhebeln betätigt werden. Durch die grosse Anzahl von benötigten Einzelteilen entsteht bei diesen Drucktastenblöcken ein grosser Aufwand bei der Fertigung der Teile und bei der Montage.

Es ist auch ein Drucktastenblock gemäss dem Oberbegriff des Patentanspruches 1 bekannt (DE-A1-2 551 143), bei dem Reihenschieber und Spaltenschieber vorgesehen sind, die beim Betätigen einer Taste über schräge Flächen verschoben werden. Ein gemeinsamer Kontakt wird durch die Spaltenschieber über einen wippenförmigen Übertragungshebel betätigt.

Bei diesem Druckschalter sind viele Einzelteile, insbesondere Schieber, vorhanden. Die Schieber sind in Schnappverbindern verschiebbar gelagert, so dass bei der Betätigung viel Reibung auftritt. Durch die Ausbildung und Anordnung der Schieber ist die Bauhöhe nicht klein.

Der Erfindung liegt die Aufgabe zugrunde, einen Drucktastenblock der eingangs genannten Art so auszubilden, dass eine flache kompakte Bauweise erreicht wird, dass wenig Einzelteile vorhanden sind und diese leicht zu fertigen und zu montieren sind.

Diese Aufgabe wird erfindungsgemäss dadurch gelöst, dass die Kulisse mit Kunststoffedern aufgehängt ist, dass die Kunststoffedern an der rechteckförmigen Kulisse mit angespritzt sind und von etwa der Mitte der Schmalseiten parallel zu diesen nach aussen verlaufend angeordnet sind, und dass diese Kunststoffedern mit ihren Enden in Schlitzen des Tastengehäuses gelagert sind.

Diese Ausbildung hat die Vorteile, dass nur ein einziges Teil als Kulisse für die Betätigung der gemeinsamen Kontakte vorhanden ist, dass an dieser Kulisse Kunststoffedern mit angespritzt sind, die ein einfaches und reibungsarmes Lagern der Kulisse und einen einfachen und flachen Aufbau des Druckschalters ermöglichen.

Im folgenden wird ein Ausführungsbeispiel der Erfindung anhand der Zeichnungen näher erläutert.

Es zeigt:

Fig. 1 den Drucktastenblock gemäss der Erfindung im Schnitt,

Fig. 2 einen Schnitt A-B durch den Drucktastenblock nach Fig. 1.

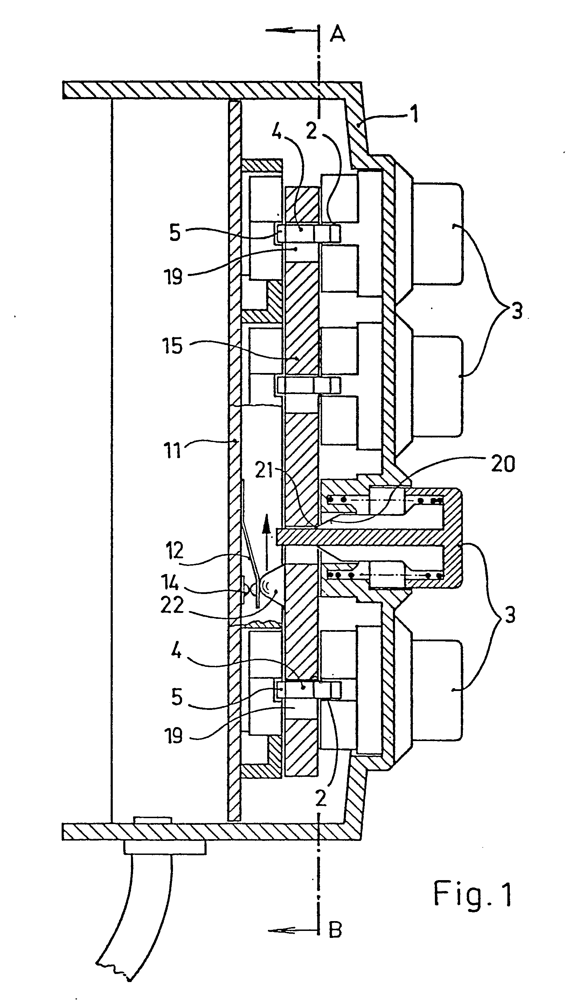

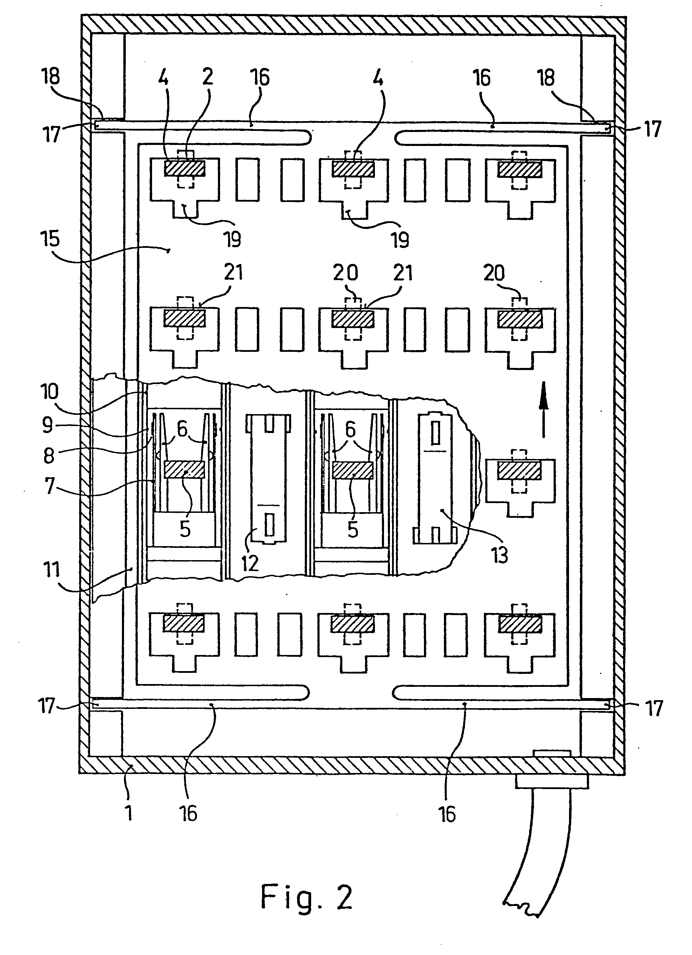

Der in den Fig. 1 und 2 dargestellte Drucktastenblock besitzt ein Tastengehäuse 1, mit kreuzförmigen Öffnungen 2, in denen Tasten 3 mit kreuzförmig ausgebildeten Tastenschäften 4 geführt sind. Beim Drücken einer Taste 3 wirken diese mit dem Ende 5 des Tastenschaftes 4 auf Kunststoffedern 6 ein, die dadurch seitlich verschwenkt werden und dadurch Kontaktfedern 7 mit Kontakten 8 zur Anlage an Kontakte 9 von Kontaktstreifen 10 bringen. Die Kunststoffedern 6, die Kontaktfedern 7 und die Kontaktstreifen 10 sind auf einer Kontaktleiterplatte 11 befestigt, die unterhalb der Tasten im Tastengehäuse angebracht ist.

Auf der Kontaktleiterplatte 11 sind auch im Ausführungsbeispiel zwei gemeinsame Kontaktfedern 12 und 13 angebracht, die jedesmal beim Drücken einer Taste mitbetätigt werden sollen. Die Kontaktfedern 12 und 13 wirken mit Kontakten 14 zusammen, die auf der Kontaktleiterplatte 11 angebracht sind.

Damit die Kontaktfedern 12 und 13 betätigt werden, ist eine plattenförmig ausgebildete Kulisse 15 aus Kunststoff vorgesehen. An der rechteckförmigen Kulisse 15 sind Kunststoffedern 16 so mit angespritzt, dass sie von der Mitte der Schmalseiten und parallel zu diesen nach aussen verlaufen. Die Kulisse 15 ist senkrecht zur Bewegungsrichtung der Tasten mit den Enden 17 der Kunststoffedern 16 so in Schlitzen 18 des Gehäuses gelagert, dass sich die Kulisse zwischen dem Tastengehäuse und der Kontaktleiterplatte 11 mit Abstand befindet und nur an den Enden 17 geringe Reibung auftritt. Die Kulisse 15 wird mit ihren Enden 17 in die Schlitze 18 eingelegt und durch Aufsetzen der Kontaktleiterplatte 11 in diesen gehalten.

Die Kulisse 15 ist mit Aussparungen 19 zum Durchtritt der Tastenschäfte 4 versehen. Zum Verschieben der Kulisse 15 in Pfeilrichtung beim Drücken einer Taste 3 ist jeder Tastenschaft 4 mit einer schrägen Fläche 20 versehen und wirkt mit einer Kante 21 der Aussparungen 19 zusammen, die ebenfalls abgeschrägt ist. Je nach Wahl der Schrägen 20 des Tastenschaftes und der Schrägen der Kanten 21 der Aussparungen 19 wird ein gewünschter Druckpunkt erzielt.

Die Kulisse 15 trägt an ihrer der Kontaktleiterplatte 11 zugewandten Seite Schaltnocken 22. Beim Betätigen einer Taste 3 werden die Kulisse 15 und auch die Schaltnocken 22 in Pfeilrichtung bewegt, so dass der zugehörige Kontakt 12, im Ausführungsbeispiel Fig. 1, geöffnet wird, und der Kontakt 13 geschlossen wird. Nach einem Loslassen der betätigten Taste 3 bringen die Kunststoffedern 16 die Kulisse 15 wieder in die Ausgangsstellung zurück.

## Patentansprüche

1. Drucktastenblock, insbesondere für die Tastenwahl in Fernmeldegeräten, bei dem beim Betätigen einer Taste (3) jeweils mehreren Tasten (3) gemeinsame Kontakte (12, 14) über eine seitlich verschiebbare Kulisse (15) betätigt werden, welche Kulisse (15) plattenförmig aus Kunststoff ausgebildet und in senkrechter Lage zur Bewegungsrichtung der Tasten (3) aufgehängt ist, und bei welchem Drucktastenblock zur seitlichen Verschiebung der Kulisse (15) diese mit Aussparungen (19) versehen ist, in die Schrägen (20) der Tasten (3) eingreifen, dadurch gekennzeichnet, dass die Kulisse (15) mit Kunststoffedern (16) aufgehängt ist, dass die Kunststoffedern (16) an der rechteckförmigen Kulisse (15) mit angespritzt sind und von etwa der Mitte der Schmalseiten parallel zu diesen nach aussen verlaufend angeordnet sind, und dass diese Kunststoffedern (16) mit ihren Enden (17) in Schlitzen (18) des Tastengehäuses (1) gelagert sind.

2. Drucktastenblock nach Anspruch 1, dadurch gekennzeichnet, dass die Kunststoffedern (16) so ausgebildet und die Schlitze (18) so angeordnet sind, dass die Kulisse (15) zwischen dem Tastengehäuse (1) und einer Kontaktplatte (11) mit Abstand und nur an den Enden (17) der Kunststoffedern (16) auftretender geringer Reibung gelagert ist.

3. Drucktastenblock nach Anspruch 2, dadurch gekennzeichnet, dass die Kulisse (15) an ihrer der Kontaktplatte (11) zugewandten Seite mit Schaltnocken (22) versehen ist und dass auf der Kontaktplatte (11) mit den Schaltnocken (22) zusammenwirkende Kontakte (14) angebracht sind.

4. Drucktastenblock nach Anspruch 1, dadurch gekennzeichnet, dass je nach Wahl der Schrägen (20) des Tastenschaftes (4) der Tasten (3) und der Schrägen der Kanten (21) der Aussparungen (19) in der Kulisse (15) ein gewünschter Druckpunkt erzielt wird.

5. Drucktastenblock nach Anspruch 1, dadurch gekennzeichnet, dass die Kunststoffedern (16) so ausgebildet sind, dass sie die Kulisse (15) nach der Betätigung in die Ausgangsstellung zurückstellen.

**Claims**

1. A push-button key block for push-button dialling on telecommunication instruments whereby on pushing of one key (3) common contacts (12, 14) are operated via a sideways shiftable wing (15) which is shaped plate-like and made of plastic and is fixed at right angles to the direction of motion of the keys (3) and whereby in said wing (15) there are provided hollows where slopes (20) of the keys (3) move in for sideways shifting of the wing, comprising that the wing (15) is fixed by plastic springs (16), that the plastic springs (16) are die-cast on to the wing (15) which is rectangle-shaped and which springs (16) extend from about the middle of the narrow sides outwards parallel to them, and said plastic springs (16) have their bearing surface with their ends (17) in side slots (18) of the key case (1).

2. Push-button key block as claimed in Claim 1 comprising that the plastic springs (16) are shaped and the slots (18) are arranged in such a manner that the wing (15) has its bearing surface between the key case (1) and a contact board (11) with space and only at the ends (17) of the plastic springs little friction occurs.

3. Push-button key block as claimed in Claim 2 comprising that the wing (15) is provided with switching cams (22) on its side towards the contact board (11) and that on the contact board (11) there are applied contacts (14) which cooperate with said switching cams (22).

4. Push-button key block as claimed in Claim 1 comprising that by choice of the slopes (20) of the key shaft (4) of the keys (3) and of the slopes of the edges of the hollows in the wing (15) a wanted triggering point is effected.

5. Push-button key block as claimed in Claim 1 comprising that the plastic springs (16) are formed such that they are able to reset the wing (15) into resting position after operation.

**Revendications**

1. Poste à boutons poussoirs, en particulier pour la sélection par touches dans des appareils de télécommunications, dans lequel, lors de la manoeuvre d'une touche (3), des contacts communs (12, 13) à plusieurs touches (3) sont actionnés chacun par un coulisseau (15) à déplacement latéral, qui est réalisé sous la forme d'une plaque en matière plastique et qui est suspendu en position perpendiculaire par rapport à la direction de déplacement des touches (3), et dans lequel le coulisseau est muni, pour son déplacement latéral, d'évidements (19) dans lesquels viennent en prise des biseaux (20) des touches (3), caractérisé en ce que le coulisseau (15) est suspendu par des ressorts en matière plastique (16), que les ressorts en matière plastique (16) sont injectés d'une seule pièce avec le coulisseau (15) rectangulaire et sont disposés de façon à s'étendre vers l'extérieur en partant à peu près du milieu des petits côtés et parallèlement à ceux-ci, et que ces ressorts en matière plastique (16) sont montés par leurs extrémités (17) dans des rainures (18) du boitier à touches (1).

2. Poste à boutons poussoirs selon la revendication 1, caractérisé en ce que les ressorts en matière plastique (16) sont réalisés et les rainures (18) sont disposés de telle façon que le coulisseau (15) est monté entre le boitier à touches (1) et une plaque de contact (11), en étant écarté de ce boitier et de cette plaque et tel qu'un frottement réduit se produit seulement aux extrémités (17) des ressorts en matière plastique (16).

3. Poste à boutons poussoirs selon la revendication 2, caractérisé en ce que le coulisseau (15) est muni de cames de commutation (22) sur la face tournée vers la plaque de contact (11), et que des contacts (14) coopérant avec les cames de commutation (22) sont fixés sur la plaque de contact (11).

4. Poste à boutons poussoirs selon la revendication 1, caractérisé en ce qu'on obtient un point de pression désiré en fonction du choix des biseaux (20) de la tige (4) des touches (3) et des biseaux des bords (21) des évidements (19) du coulisseau (15).

5. Poste à boutons poussoirs selon la revendication 1, caractérisé en ce que les ressorts en matière plastique (16) sont réalisés de telle façon quils ramènent le coulisseau (15) en position de départ après la manoeuvre.

Fig.1

Fig. 2